# EUROPEAN PATENT SPECIFICATION

(11) **EP 3 532 315 B1**
(45) Date of publication and mention of the grant of the patent: **26.08.2020**
(21) Application number: 17791170.8
(22) Date of filing: 11.10.2017
(51) Int. Cl.: B60C 11/03

(54) **MOTORCYCLE TYRE**
MOTORRADREIFEN
PNEU DE MOTO

(30) Priority: 28.10.2016 IT 201600109457
(43) Date of publication of application: 04.09.2019
(60) Divisional application: 20185248.0
(73) Proprietor: Pirelli Tyre S.p.A., 20126 Milano (IT)
(72) Inventor: MARIANI, Mario, 20126 Milan (IT); PEREGO, Mirko Giovanni, 20126 Milan (IT); GALLO, Sandro, 20126 Milan (IT)
(74) Representative: Fabiano, Piero
(86) International application number: PCT/IB2017/056272
(87) International publication number: WO 2018/078476

(56) References cited:
- EP-A1- 2 698 263
- EP-A2- 2 202 097
- JP-A- H03 135 802
- JP-A- S63 212 105
- JP-U- S62 118 704
- US-A- 3 637 001

## Description

### Field of the invention

The present invention relates to tyres for motorcycle wheels and particularly to tyres for agile motorcycles and/or scooters.

### Prior art

Typically, by the expression tyres for agile motorcycles and/or scooter a range of tyres is meant which is intended to be fitted to motorcycles and/or scooters mainly used for urban driving, which may involve fast and sudden maneuvers in small spaces, or short extra-urban journeys, which include motorcycles having small-medium engine capacities (e.g. from 50 cm³ to 500 cm³) and/or low-medium power (e.g. 15-75 hp).

Tyres intended to be fitted to agile motorcycles and/or scooters are thus typically used on extremely different kinds of road surfaces, often characterized by low friction coefficients, e.g. smooth and/or wet asphalt, rails, concrete, sett paving or cobblestone. Besides grip, draining ability, stability and traction on such different road surfaces, these tyres are required to have optimal performance in terms of lifespan and wear. Motorcycles tyres are for example described in patent documents US2005/0098250, US4606389, JPS63212105, JPH03135802, JPS62118704, US3637001, EP2698263, EP2202097 and WO2014016733.

### Summary of the invention

Typically, in this product segment tyres having a large number of grooves are used, for providing good draining and grip features in low friction conditions (concrete, sett paving, cobblestone, rails), typical for a mainly urban use. This is due to the fact that such tyres typically do not employ tread compounds with high hysteresis properties, the grip being thus usually provided by the displacement of the solid rubber portions located between the grooves. Such rubber portions have relatively small dimensions and thus a low stiffness.

The aforesaid grooves also make water drainage easier when driving on a wet road surface.

The Applicant has observed that tyres intended to be fitted to the front wheel of these motorcycles often have at least one circumferential groove having significant dimensions, located across the equatorial plane, possibly with a zig-zagging course.

A groove having significant dimensions and circumferentially extending along the whole circumferential development of the tyre ensures, in fact, good draining and grip features, particularly in low friction conditions, exactly because of the increased yielding ability of the most central portion of the tread band, which provides in this way a better grip to the road surface in the footprint area.

The Applicant has also noted that a zig-zagging arrangement of such circumferential groove can in addition increase the traction and braking ability of the tyre.

However, the Applicant has also observed that a circumferential groove of this kind tends to weaken the tread band structure, making the same less stiff. A lower stiffness of the tread band may lead to a less performing driving on dry grounds. In particular, a less gradual response of the vehicle during driving maneuvers may let the user have a feeling of greater heaviness and less thrust.

Moreover, the lower stiffness of the tread band may make the same more subjected to wear and may reduce its mileage.

The Applicant has also observed that a higher number of grooves may cause noise ad vibrations.

The Applicant has thus felt the need to provide a tyre intended to be fitted to motorcycles, particularly agile motorcycles and/or scooters, having good draining, grip, and traction features, particularly on terrains characterized by low friction, and, at the same time, enough structural stiffness, for ensuring performance, graduality and driving lightness as well as thrust on dry grounds.

The Applicant has found that such needs can be met by a tyre having a low void-to-rubber ratio in the central portion of the tread band across the equatorial plane, grooves having a significant length extending at an angle away from the equatorial plane, and a plurality of recesses with limited plan dimensions, substantially isolated from the remaining "voids", i.e. cuts, grooves, sipes and generally any opening formed in the solid rubber of the tread band, said recesses being distributed substantially uniformly and with a linear density suitable for not reducing the stiffness of the tread band.

In a first aspect thereof, the invention relates to a motorcycle tyre, comprising an equatorial plane and a tread band, characterized in that:
- said tread band comprises a central annular portion located across the equatorial plane and two lateral annular portions opposed to each other relative to the central annular portion;
- the central annular portion extending in an axial direction over a width smaller than 20% of the width of the tread band;
- the tread band has a void-to-rubber ratio equal to or greater than 10%, preferably equal to or greater than 12%;
- the tread band comprises a plurality of pairs of primary grooves and a plurality of secondary recesses;
- the pairs of primary grooves are repeated along a direction of circumferential development of the tyre;
- the primary grooves of each pair are mutually oppositely inclined relative to the equatorial plane of the tyre;
- the primary grooves have a length equal to or greater than 30% of the width of the tread band;
- each secondary recess has a maximum length and a maximum width such that the ratio of the maximum length and the maximum width is smaller than or equal to 2 and the maximum length is smaller than or equal to 10 mm;
- each secondary recess is isolated;
- the plurality of secondary recesses extends at least mainly in the lateral annular portions,
- the plurality of secondary recesses is distributed in the tread band with a linear density equal to or higher than two recesses per decimeter of the circumferential development of the tread band.

The Applicant has made a tyre having a determined number of grooves having a significant length and extending away from the equatorial plane towards the tyre shoulders, a most central tread band portion provided with a limited number of grooves and/or cuts for providing stiffness, and a number of cuts with limited plan dimensions and substantially uniformly distributed, but numerically limited, for providing local yielding to the tread band.

Generally speaking, the Applicant believes that providing a tread band central portion having low number of grooves and/or cuts, and hence a low void-to-rubber ratio, increases the strength of the tread band, thus promoting graduality and driving lightness, particularly on dry grounds.

The Applicant further believes that in this case the draining action may be mainly committed to grooves having significant dimensions and extending away from the equatorial plane.

Finally, the Applicant believes that providing recesses having limited plan dimensions, preferably lacking a prevailing dimension, distributed in a limited number and uniformly in predetermined regions of the tread band, ensures a local and controlled yielding of the tread band itself, thus increasing the tyre grip without reducing too much its stiffness. By "tread pattern" it is meant the representation of each point of the tread band (including the grooves) on a plane perpendicular to the equatorial plane of the tyre and tangent to the maximum diameter of the tyre.

Angular measurements and/or linear quantities (distances, widths, lengths, etc.), and/or surface areas are to be intended as referring to the tread pattern as defined above.

Considering the angular arrangement of the grooves and/or recesses formed in the tread band relative to the equatorial plane of the tyre, such angular arrangement shall be understood for each point of the groove and/or recess as the angle of between 0° and 90° (in absolute value) delimited by the tangent to the groove and/or recess at said point and the equatorial plane.

By "motorcycle tyre" it is meant a tyre having a high curvature ratio (typically greater than 0.20), which allows high camber angles to be reached when the motorcycle runs on a bend.

By "equatorial plane" of the tyre it is meant a plane perpendicular to the rotation axis of the tyre and dividing the tyre into two equal portions.

By "circumferential" direction it is meant a direction generically directed according to the rotation direction of the tyre, or in any case only slightly inclined relative to the rotation direction of the tyre.

By "axial" direction or "axially" it is meant a direction parallel to, or in any case only slightly inclined relative to the rotation axis of the tyre.

By "void-to-rubber ratio" it is meant the ratio between the total surface area of the recesses, sipes and grooves in a given portion of the tread pattern of the tyre (possibly of the whole tread pattern) and the total surface area of the same given portion of the tread pattern (possibly of the whole tread pattern).

By "curvature ratio" of the tyre it is meant the ratio between the distance of the radially highest point of the tread band from the maximum cross section width (also called maximum chord) of the tyre, and the same maximum width of the tyre, in a cross section of the tyre.

By "maximum cross section width" (or maximum chord) it is meant the maximum width of the tyre profile, in other words the length of the segment whose ends are the axially outermost points of the tread band profile.

By "width of the tread band" it is meant the width of the development of the tread band measured between the axially outermost points of the tread band profile.

By "isolated", when referring to a secondary recess, it is meant that around the secondary recess, over a distance of at least 7 mm from the edges of the recess itself, the void-to-rubber ratio is smaller than 0.01, preferably equal to zero.

In other words, around isolated secondary recesses there are no other voids (i.e. cuts, grooves, sipes and generally any opening formed in the solid rubber of the tread band), leaving out voids of irrelevant extent.

By "significant dimensions", when referring to a groove, preferably a groove arranged according to the circumferential direction, it is meant that the groove has a length equal to at least 5% of the circumferential development of the tread band, together with a width of at least 1 mm and/or a depth of at least 3 mm.

The present invention, in one or more preferred aspects thereof, may comprise one or more of the features hereinafter presented.

Advantageously, the plurality of secondary recesses is distributed in the tread band with a linear density equal to or lower than 20 recesses per decimeter of the circumferential development of the tread band.

Preferably, the maximum length of the secondary recesses is substantially equal to 1.5 times their maximum width. Even more preferably, the maximum length and width of the secondary recesses are substantially the same.

Preferably, the secondary recesses may have a substantially circular plan section. Preferably, each secondary recess may have a minimum distance from the closest secondary recess greater than 15 mm.

Advantageously, each secondary recess may have a minimum distance from the closest secondary recess smaller than 90 mm.

Preferably, the number of secondary recesses formed in the tread band may be greater than twenty, preferably greater than thirty.

Preferably, the number of secondary recesses formed in the tread band may be smaller than three hundred and fifty.

Advantageously, the primary grooves may be arranged so as to move away from the equatorial plane according to an extension direction having, at least over a portion thereof closer to the equatorial plane, an inclination angle relative to the equatorial plane smaller than 60°.

Conveniently, the tread band has a plurality of sipes.

Preferably, the sipes may be arranged so as to alternate with the primary grooves in the circumferential direction.

Advantageously, the sipes may not have intersection points with the primary grooves. Conveniently, the sipes are located only in the lateral annular portions. Advantageously, the sipes may have a length smaller than or equal to 15% of the width of the tread band.

Conveniently, the sipes may have a length greater than or equal to 3% of the width of the tread band.

Preferably, the sipes may comprise at least one portion having an extension direction parallel to the extension direction of the primary grooves.

Advantageously, at least one third, substantially transverse, groove may be located in the central annular portion.

Preferably, the third grooves may have a length smaller than or equal to 15% of the width of the tread band.

Advantageously, the third grooves are inclined so as to form an angle of between 60° and 90° relative to the equatorial plane.

Preferably, the third grooves may not have intersection points with the secondary recesses and the sipes.

Advantageously, the third grooves may extend only in the central annular portion. Conveniently, the central annular portion may have a void-to-rubber ratio equal to or smaller than 5%.

### Brief description of the drawings

Further features and advantages of the invention shall become clearer from the detailed description of some preferred, although not exclusive, embodiments of a tyre for motorcycle wheels, particularly wheels of agile motorcycles and/or scooters, according to the present invention.

Such description shall be made hereafter with reference to the accompanying drawings, provided only for indicating, and thus non-limiting, purposes, wherein:
- figure 1 shows a perspective view of a first example of a tyre according to the invention intended to be fitted to the front wheel of an agile motorcycle and/or a scooter;
- figure 2 is a radial section view of the tyre of figure 1;
- figure 3 is a schematic plan view of a tread band portion of the tyre of figure 1;
- figure 4 is a schematic perspective and partially sectional view of an enlarged portion of the tread band of figure 3, and
- figure 5 is a schematic plan view of a tread band portion of a tyre according to the invention intended to be fitted to the rear wheel of an agile motorcycle and/or a scooter.

### Detailed description of embodiments

Referring to the attached figures, a tyre for scooter and/or motorcycle wheels according to the present invention is generally indicated at 1. The tyre is in particular intended to be used on a front or rear wheel of an agile motorcycle and/or a scooter, i.e. motorcycles mainly used for urban driving or for short extra-urban journeys, which include motorcycles having small-medium engine capacities (e.g. from 50 cm³ to 500 cm³) and/or medium power (e.g. 15-75 hp).

An equatorial plane X-X and a rotation axis Z, perpendicular to the equatorial plane X-X, are defined in the tyre 1. Moreover, there are defined an axial (or transverse, or lateral) direction, substantially parallel to the rotation axis Z and a circumferential (or longitudinal) direction, substantially parallel to the equatorial plane X-X and corresponding to the rolling direction of the tyre 1.

The tyre 1 comprises a carcass structure 2 including at least one first 2a and one second carcass ply 2b, radially superimposed on each other, each made of an elastomeric material and comprising a plurality of reinforcing elements 3 arranged parallel to one another. The first 2a and the second carcass ply 2b engage, by means of opposite circumferential edges thereof, also superimposed, at least one annular reinforcing structure 9.

In particular, the opposite lateral edges of the carcass plies 2a, 2b are turned up about annular reinforcing structures, called bead cores 4.

A tapered elastomeric filling 5 taking up the space defined between the carcass plies 2a, 2b and the respective turned-up lateral edge of the carcass plies 2a, 2b is applied onto the axially outer perimeter edge of the bead cores 4.

As known, the tyre region comprising the bead core 4 and the filling 5 forms the so-called bead, intended for anchoring the tyre to a respective fitting rim, not shown.

In an alternative embodiment, not shown, the carcass plies have their opposite lateral edges associated without a turn-up with special annular reinforcing structures provided with two metal annular inserts. A filling of elastomeric material may be located in an axially outer position relative to the first annular insert. A second annular insert may be located in an axially outer position relative to the end of the carcass layer. Finally, in an axially outer position relative to said second annular insert, and not necessarily in contact with the same, a further filling may be provided which terminates the formation of the annular reinforcing structure.

The carcass plies are radially superimposed on each other in such a way that the reinforcing elements 3 of a ply are inclined relative to the reinforcing elements 3 of the radially superimposed carcass ply and to the equatorial plane X-X.

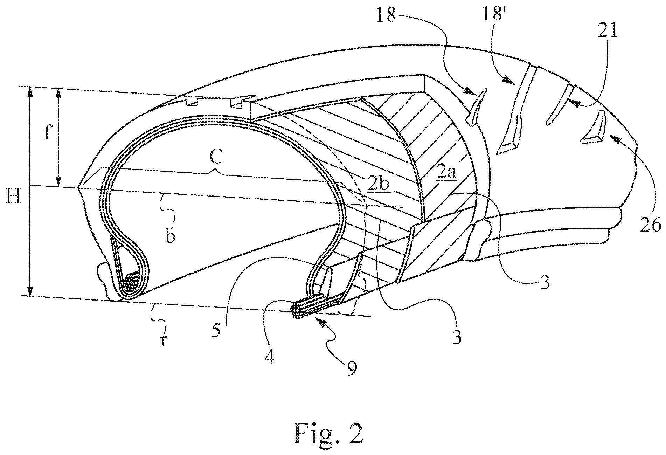

Referring to the embodiment shown in figure 2, the carcass structure 2 comprises a first carcass ply 2a and a second carcass ply 2b, radially superimposed on the first carcass ply. The reinforcing elements 3 of the second carcass ply 2b are oppositely arranged relative to the reinforcing elements 3 of the first carcass ply 2a, in other words they have the same inclination relative to the equatorial plane X-X, but are oppositely oriented.

Still referring to the embodiment shown in figure 2, the reinforcing elements 3 included in the carcass plies 2a, 2b preferably comprise textile cords, selected from those usually adopted in the manufacture of carcasses for tyres, for example Nylon, Rayon, PET, PEN cords, with an elementary filament having a diameter of between 0.35 mm and 1.5 mm. Alternatively, the carcass structure might be formed by at least one carcass layer comprising a plurality of reinforcing elements 3 (cords). In this case, the at least one carcass layer is shaped according to a substantially toroidal configuration and is engaged with at least one annular reinforcing structure by means of its opposite circumferential edges.

In this case the carcass ply is preferably lined on its radially inner wall with a sealing layer, so-called "liner", essentially consisting of a layer of an airtight elastomeric material, adapted to ensure the tight seal of the tyre 1 itself after it has been inflated.

In a radially outer position relative to the carcass structure 2 the tyre 1 does not have a belt structure.

Alternatively, in an embodiment not shown, the tyre 1 might have a belt structure. According to this other embodiment, the belt structure may be formed by at least two radially superimposed layers, each consisting of elastomeric material reinforced with cords arranged parallel to one another.

The layers are arranged so that the cords of the first belt layer are oriented obliquely relative to the equatorial plane X-X of the tyre, whereas the cords of the second layer also have an oblique orientation, but symmetrically crossed relative to the cords of the first layer (so-called "cross-belt"). In this case the cords of the belt structure are textile or metal cords.

Alternatively, according to an embodiment not shown, the belt structure might comprise at least one belt layer typically formed by cords arranged substantially parallel to one another and in side-by-side relationship so as to form a plurality of coils. These coils are substantially oriented according to the circumferential direction (typically with an angle of between 0° and 5°), such direction being usually called "at zero degrees" with reference to its lying relative to the circumferential direction of the tyre.

Preferably, the layer usually called "at zero degrees" may comprise windings axially arranged in side-by-side relationship, made up of a single cord or of a rubberized fabric strip comprising cords axially arranged in side-by-side relationship.

Also in this case the cords of the layer are textile or metal cords

A tread band 8 is circumferentially applied, in a radially outer position, on the carcass structure 2. Further to a molding operation carried out at the same time with the vulcanization of the tyre, grooves, sipes and recesses, arranged so as to define a desired tread pattern, are typically formed in the tread band 8.

The tyre 1 may comprise a pair of sidewalls laterally applied on opposite sides to said carcass structure 2.

The tyre 1 has a cross section characterized by a high transverse curvature.

In particular, the tyre 1 has a section height H measured, at the equatorial plane, between the top of the tread band and the fitting diameter, identified by a reference line r, passing through the tyre beads.

The tyre 1 further has a width C defined by the distance between the laterally opposite ends of the tread itself, and a curvature defined by the specific value of the ratio between the distance f of the top of the tread from the line passing through the ends of the tread itself, measured at the equatorial plane of the tyre, and the aforesaid width C. The ends of the tread may be formed by a corner.

The tyres have a curvature ratio f/C not smaller than 0.2, preferably f/C ≥ 0.25, for example 0.28. Preferably, such curvature ratio f/C is not greater than 0.8, preferably f/C ≤ 0.5.

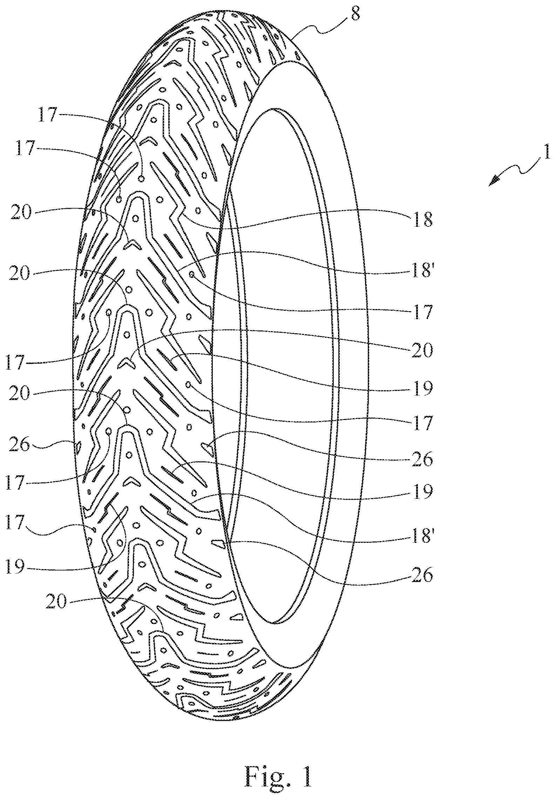

In the embodiment shown in figures 1-3, the tread band 8 has a central annular portion A1 located across an equatorial plane X-X and two lateral annular portions A2, A3 opposed to each other relative to the central annular portion A1.

The central annular portion A1 may be visually identified as the annular portion located between two facing and opposite ends of two primary grooves 18, which will be better described below.

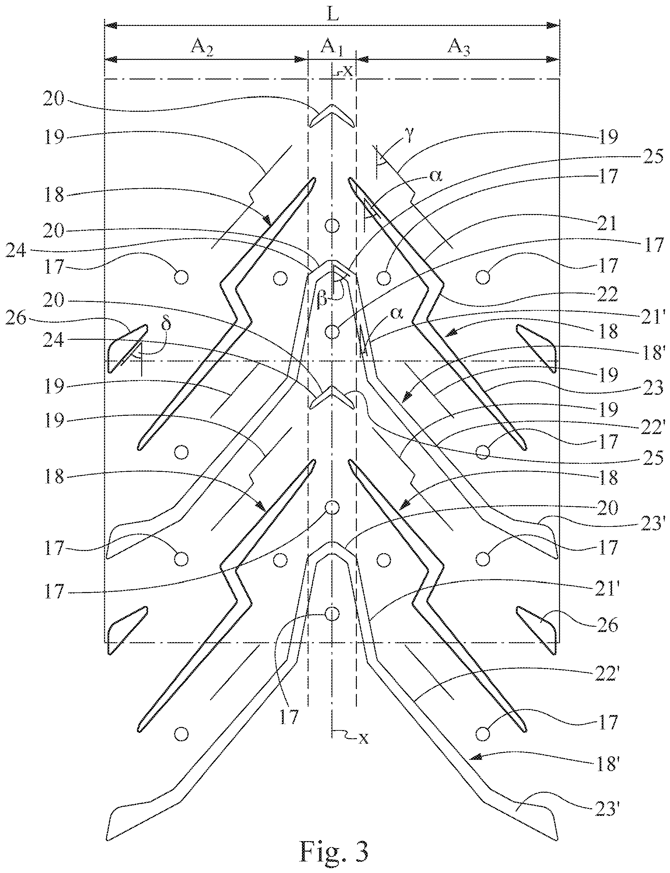

The tread band shown in figures 1 and 3 is thus visually formed by a central annular portion A1 having a limited dimension, and by two lateral annular portions A2, A3 having a significant axial dimension.

In detail, the central annular portion A1 extends in the axial direction over a width smaller than 20%, preferably smaller than 15%, of the width L of the tread band 8.

As better shown in figure 3, a tread pattern is formed on the tread band 8. The tread pattern comprises a plurality of grooves, recesses and sipes, which overall define in the tread band a void-to-rubber ratio greater than 10%, preferably greater than 12%, for example equal to about 14%.

Preferably, for providing a suitable stiffness to the tread band without limiting its draining ability, the grooves, recesses and sipes overall define in the tread band a void-to-rubber ratio smaller than 20%, preferably smaller than 17%.

As previously set forth, the central annular portion A1 of the tread band 8 is configured so as to be robust, thus promoting graduality and driving lightness, particularly on dry grounds and when running on straight paths.

To this end, the central annular portion A1 has a limited void-to-rubber ratio, preferably equal to or smaller than 5%.

In other words, the central annular portion A1 does not have circumferential grooves with significant dimensions, for example extending circumferentially over the whole circumferential development of the tyre.

In such a tyre, the draining of water is mainly committed to the lateral annular portions A2, A3, which have to this end a void-to-rubber ratio equal to or greater than 15%, preferably equal to or greater than 17%.

For not excessively reducing the stiffness of the lateral annular portions A2, A3, and wishing nevertheless to provide localized regions with a lower stiffness, so as to promote grip particularly on grounds characterized by low friction, the lateral annular portions A2, A3 have a plurality of secondary recesses 17.

The secondary recesses 17 have limited plan dimensions and are substantially uniformly distributed.

Preferably, the secondary recesses 17 are distributed in the lateral annular portions A2, A3 with a linear density equal to or higher than two, preferably three, recesses per decimeter of the circumferential development of the tread band 8.

In each lateral annular portion A2, A3 the secondary recesses are in any case distributed with a linear density equal to or lower than ten recesses per decimeter of the circumferential development of the tread band 8.

The number of secondary recesses 17 in the lateral annular portion A2 and in the lateral annular portion A3 is the same.

Furthermore, each secondary recess 17 of the lateral annular portion A2 is preferably located circumferentially and/or relative to the equatorial plane X-X of the tyre in a position corresponding to a secondary recess 17 of the lateral annular portion A3. It is thus obtained a uniform and substantially symmetrical distribution of the secondary recesses 17 in the lateral annular portions A2, A3.

Referring to the embodiment shown in figures 1, 3, the secondary recesses 17 of the lateral annular portions A2, A3 are preferably arranged according parallel lines in a generally axial direction.

The secondary recesses 17 may be located only in the lateral annular portions A2, A3, or they may be located both in lateral annular portions A2, A3 and in the central annular portion A1.

In the case where the secondary recesses 17 are located both in the central annular portion A1 and in the lateral annular portions A2, A3, the total number of secondary recesses 17 in the lateral annular portions A2, A3 is prevailing, i.e. it is larger than the number of secondary recesses 17 in the central annular portion A1.

In the case where the secondary recesses 17 are located only in the lateral annular portions A2, A3, the total number of secondary recesses 17 in the lateral annular portions A2, A3 is in any case prevailing, i.e. it is larger than the number of secondary recesses 17 in the central annular portion A1, which is equal to zero.

In any case, the plurality of secondary recesses 17 is distributed so that each surface as wide as the tread band 8 and one decimeter long comprises at least two secondary recesses.

In the embodiment shown in figures 1, 3, preferably intended for fitting to the front tyre of a motorcycle, secondary recesses 17 are also provided in the central annular portion A1.

Preferably, the secondary recesses 17 in the central annular portion A1 have a linear density equal to or smaller than seven recesses per decimeter of the circumferential development of the tread band 8.

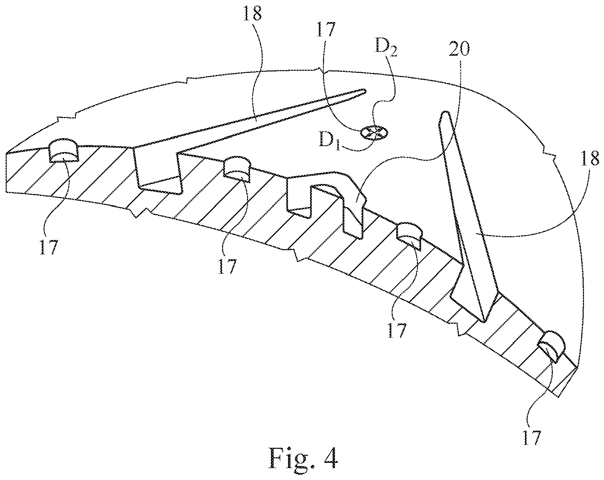

In the embodiment shown in figures 1, 3, 4 the secondary recesses 17 of the central annular portion A1 are preferably located so as to intersect the equatorial plane X-X. The secondary recesses 17, again for not excessively reducing the stiffness of the tread band 8 in the region where they are located, have limited plan dimensions and substantially do not have a prevailing extension direction.

Each secondary recess 17 has a maximum length D1 and a maximum width D2 such that D1/D2 ≤ 2, preferably D1/D2 ≤ 2.

Preferably, the maximum length D1 is equal to or smaller than 10 mm, preferably equal to or smaller than 7 mm, even more preferably equal to or smaller than 5 mm.

The embodiment shown in figures 1, 3 and 4 is a particular embodiment, wherein the maximum length D1 is substantially the same as the maximum width D2.

In detail, in the embodiment shown in figures 1, 3, 4 the secondary recesses 17 have a substantially circular plan section, wherein the maximum length D1 and the maximum width D2 correspond to the diameter.

Alternatively, the maximum length D1 and the maximum width D2 may be the same and the secondary recesses 17 may have a substantially square plan section.

Preferably, the secondary recesses 17 have a decreasing depth, which gets smaller moving from the equatorial plane X-X towards the shoulders. The depth of the secondary recesses 17 gradually decreases moving towards the shoulders of the tyre, in order to increase the compactness of the tread band 8 and the lateral thrust when steering at the maximum angle and leaning on dry ground. In other words, the secondary recesses 17 located at the equatorial plane X-X have a greater depth than the secondary recesses 17 located more away from the equatorial plane X-X. Preferably, the secondary recesses 17 have a depth greater than or equal to 2 mm.

In any case, the secondary recesses 17 have a depth smaller than or equal to 8 mm.

For not creating preferential strain directions and, in any case, not excessively reducing the stiffness of the tread band 8, the secondary recesses 17 are isolated. Around a secondary recess, over a distance of at least 7 mm from the edges of the recess itself, the void-to-rubber ratio is smaller than 0.01, preferably equal to zero.

In other words, around isolated secondary recesses there are no other voids (i.e. cuts, grooves, sipes and generally any opening formed in the solid rubber of the tread band), leaving out voids of irrelevant extent.

In the tread band 8, and particularly in the lateral annular portions A2, A3, each secondary recess 17 has a minimum distance from the closest secondary recess 17 greater than 15 mm.

Preferably, each secondary recess 17 has a minimum distance from the closest secondary recess 17 smaller than 90 mm.

Overall, the number of secondary recesses 17 formed in the tread band 8 is greater than twenty, preferably greater than thirty, even more preferably greater than forty, even more preferably greater than fifty.

The number of secondary recesses 17 formed in the tread band 8 is smaller than three hundred and fifty, preferably smaller than three hundred.

The tread band preferably has sipes 19.

The sipes 19 preferably have a width smaller than 2 mm.

The sipes 19 may have a depth of between 2 and 8 mm, for example equal to 3 mm.

The sipes 19 are preferably located in the lateral annular portions A2, A3. However, they might also be located in the central annular portion A1 or extend in such annular portion. Referring to the embodiment shown in the figures, it can be noted that also the sipes 19, similarly to the secondary recesses 17, are substantially isolated. In other words around the sipes 19 there is solid rubber and the sipes 19 do not have intersection points neither with the primary grooves 18, 18', nor with the secondary recesses 17.

The sipes 19 preferably have a length smaller than or equal to 15% of the width L of the tread band 8. The sipes 19 have length greater than or equal to 3% of the width L of the tread band 8.

Referring to the embodiment shown in figures 1, 3, the sipes 19 extend according to two different courses, in particular a straight course and a substantially "zee"-shaped course. In both cases, the sipes 19 comprise at least one segment having an orientation parallel to the extension direction of the primary grooves 18, 18'.

In other words, still referring to the embodiment shown in figures 1, 3, the sipes 19 comprise at least one segment extending according to a direction forming an inclination angle γ ≤ 60° relative to the equatorial plane X-X.

Still referring to the embodiment shown in figure 1, 3, each sipe 19 is located between two circumferentially consecutive first grooves, namely between a primary groove 18 and a primary groove 18'. Moreover, in the circumferential direction each sipe 19 having a "zee"-shaped course alternates with a sipe 19 having a straight course.

The tread band 8 further has at least one pair of first grooves 18 or 18' oppositely inclined relative to the equatorial plane X-X.

The tread band 8 shown in figures 1, 3 has two different pairs of primary grooves, which may in particular identified as primary grooves 18 having a "Z"-shaped course (i.e. a course resembling a "Z") and primary grooves 18' having a broken line course.

The primary grooves 18 and 18' having respectively a "Z"-shaped course and broken line course differ from each other in the course, extension and inclination of the respective segments relative to the equatorial plane X-X.

Both primary grooves 18, 18' have significant dimensions.

In the embodiment shown in figures 1, 3, the primary grooves 18 have a decreasing depth, which gets smaller moving from the equatorial plane X-X towards the shoulders. Preferably, the primary grooves 18, 18' have a depth smaller than or equal to 8 mm. Preferably, the primary grooves 18, 18' have a variable width along their extension. Preferably, the primary grooves 18, 18' have a width smaller than or equal to 6 mm. Preferably, the primary grooves 18, 18' have a depth greater than or equal to 2 mm. Each primary groove 18, 18' extends axially away from the equatorial plane X-X. Preferably, the primary grooves 18, 18' extend substantially only in the lateral annular portions A2, A3.

Referring to the embodiment shown in figures 1, 3, each primary groove 18 comprises, moving axially away from the equatorial plane X-X of the tyre, a first 21, a second 22 and a third segment 23. The three segments 21, 22, 23, are consecutive and straight. For providing a high draining ability, the first segment 21 of the primary grooves 18 preferably has a length measured along its extension greater than 2% of the circumferential development of the tyre, preferably smaller than 12% of the circumferential development of the tyre.

The second, substantially straight, segment 22 of the primary grooves 18 has instead a limited length, which is smaller than the length of the first segment 21.

Preferably, the second, substantially straight, segment 22 of the primary grooves 18 has a length smaller than 3% of the circumferential development of the tyre, more preferably smaller than 2% of the circumferential development of the tyre.

Preferably, the second, substantially straight, segment 22 has a length measured along its extension smaller than 45 mm, even more preferably smaller than 30 mm.

In the embodiment shown in figures 1, 3, the third, substantially straight, segment 23 is located consecutively to the second segment 22 and has a length greater than or equal to the length of the first segment 21.

The third segment 23 has a length greater than the length of the second segment 22. Preferably, the third segment 23 of the primary grooves 18 has a length greater than 60 mm.

Such a choice for the extension of the third segment 23, together with its arrangement communicating with the second segment 22, allows the draining ability of the tyre to be increased.

Considering the tyre represented in figures 1, 3, the first segment 21 has an inclination relative to the equatorial plane X-X forming an angle α smaller than 35°, preferably smaller than 30°, even more preferably greater than 5°, for example equal to about 20°. The second segment 22 has instead an inclination relative to the equatorial plane X-X which is counter-inclined as compared to the inclination of the first segment 21.

The third segment 23 of the first grooves 18 has an inclination concordant with the inclination of the first segment 21.

The third segment 23 has an inclination relative to the equatorial plane X-X forming an angle α smaller than 35°, preferably smaller than 30°, even more preferably greater than 5°, for example equal to about 20°.

Referring to the embodiment shown in figures 1, 3, each primary groove 18' comprises, moving axially away from the equatorial plane X-X of the tyre, a first 21', a second 22' and a third segment 23'. The three segments 21', 22', 23', are consecutive and straight. For providing a high draining ability, the first segment 21' of the primary grooves 18' preferably has a length measured along its extension greater than 2% of the circumferential development of the tyre, preferably smaller than 12% of the circumferential development of the tyre.

Still for providing a high draining ability, the second, substantially straight, segment 22' of the primary grooves 18' has a length even greater than the length of the first segment 21'.

Preferably, the second, substantially straight, segment 22' of the primary grooves 18' has a length greater than 4% of the circumferential development of the tyre, more preferably smaller than 15% of the circumferential development of the tyre.

The third, substantially straight, segment 23' of the primary grooves 18' has instead a limited length, which is smaller than the length of the first segment 21' and of the second segment 22'.

Preferably, the third, substantially straight, segment 23' of the primary grooves 18' has a length smaller than 2% of the circumferential development of the tyre, more preferably smaller than smaller than 3% of the circumferential development of the tyre.

Considering the tyre represented in figures 1, 3, the first segment 21', the second segment 22' and the third segment 23' have an inclination angle relative to the equatorial plane X-X which increases moving away from the equatorial plane X-X.

In particular, considering the tyre represented in figures 1, 3, the first segment 21' has an inclination relative to the equatorial plane X-X forming an angle α preferably smaller than 20°, more preferably greater than 5°, for example of between 8° and 13°.

The second segment 22' has instead an inclination relative to the equatorial plane X-X forming an angle α preferably smaller than 55°, preferably smaller than 5°, even more preferably greater than 30°, for example equal to about 40°.

The third segment 23' has an inclination relative to the equatorial plane X-X forming an angle α smaller than 80°, preferably smaller than 75°, even more preferably greater than 40°, for example equal to about 70°.

As mentioned above, for providing a greater stiffness, the central annular portion A1 has a void-to-rubber ratio equal to or smaller than 5%.

Such void-to-rubber ratio is preferably determined by third grooves 20, which are arranged substantially transversally.

Preferably, referring to the embodiment shown in figures 1, 3, the third grooves 20 extend in the central annular portion A1.

The third grooves 20 are located only in the central annular portion A1, in such a way that they intersect the equatorial plane X-X. Preferably, the third grooves 20 are located across the equatorial plane X-X.

Preferably, the third grooves 20 may have a length smaller than or equal to 15% of the width of the tread band 8.

Preferably, the third grooves 20 may have a length greater than or equal to 3% of the width of the tread band 8.

In the embodiment shown in figures 1, 3, the third grooves 20 comprise two straight and consecutive segments 24, 25.

Still referring to the embodiment shown in figures 1, 3, the two segments 24, 25 have the same length.

Advantageously, each segment 24, 25 of the third grooves 20 is inclined relative to the equatorial plane X-X so as to form with the equatorial plane an angle β of between 60° and 90°.

In the embodiment shown in figures 1, 3, the third grooves 20 may be located between two primary grooves 18', joining the same so as to form a single groove, which extends substantially from one lateral annular portion to the other crossing the equatorial plane X-X.

Still referring to the embodiment shown in figures 1, 3, a third groove 20 joined to a pair of primary grooves 18' is followed in circumferential direction by a substantially isolated groove, i.e. a groove having no intersections with the secondary recesses 17, with the sipes 19, or with the primary grooves 18, 18'.

Preferably, the third grooves 20 have a width greater than or equal to 2 mm. Preferably, the third grooves 20 have a width smaller than or equal to 9 mm.

Preferably, the third grooves 20 have a decreasing depth, which gets smaller moving from the equatorial plane X-X towards the shoulders. Preferably, the third grooves have a depth smaller than or equal to 8 mm, more preferably equal to or smaller than 6 mm, in any case, greater than or equal to 2 mm.

As shown in the embodiment of figures 1 and 3, the lateral annular portions A2, A3 may have fourth grooves 26 located in the region which is more away from the equatorial plane X-X, for breaking the continuity of the solid rubber in the tread band 8, as in the embodiment shown in figures 1, 3.

Preferably, the fourth grooves 26 may have a length smaller than or equal to 15% of the width of the tread band 8.

Preferably, the fourth grooves 26 may have a length greater than or equal to 3% of the width of the tread band 8.

Preferably, the fourth grooves 26 have a width greater than or equal to 2 mm. Preferably, the fourth grooves 26 have a width smaller than or equal to 6 mm.

Preferably, the fourth grooves 26 have a depth smaller than or equal to 6 mm, in any case greater than or equal to 2 mm.

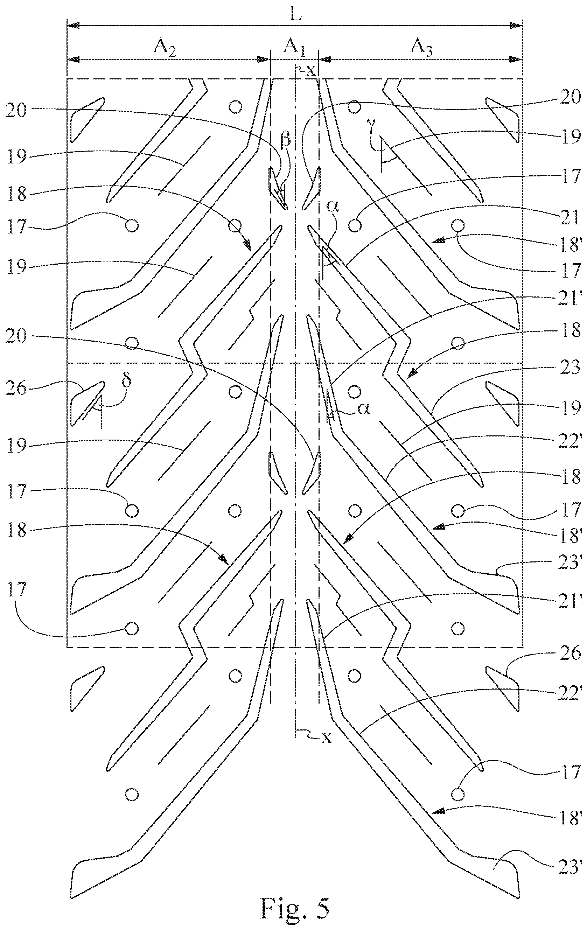

Considering the tyre represented in figures 1, 3, the fourth grooves 26 have an inclination relative to the equatorial plane X-X forming an angle δ smaller than 35°, preferably smaller than 30°, even more preferably greater than 5°, for example equal to about 20°. An embodiment of a tread band 8 of a tyre intended to be fitted to the rear wheel of an agile motorcycle and/or a scooter is shown as an example in figure 5.

The tread band 8 of figure 5 is totally similar to the tread band shown in figures 1, 3, 4, therefore corresponding elements are represented with the same reference numerals.

In detail, the tread band of figure 5 is totally similar to the tread band of figures 1, 3, 4 leaving out the central annular portion A1, in which there are no secondary recesses 17, and the course of the third grooves 20.

In this case, in fact, the secondary recesses 17 are located only in the lateral annular portions A2, A3.

The total number of secondary recesses 17 of the lateral annular portions A2, A3 is prevailing, i.e. it is larger than the number of secondary recesses in the central annular portion A1, which is equal to zero.

In the embodiment shown in figure 5 there are pairs of third grooves 20 opposed to each other relative to the equatorial plane X-X.

Each third groove 20 extends away from the equatorial plane X-X with a counter-inclination as compared to the primary grooves 18, 18'.

The present invention has been described with reference to some embodiments thereof. Many modifications can be made in the embodiments described in detail, still remaining within the scope of protection of the invention, defined by the following claims.

## Claims

1. Motorcycle tyre (1), comprising an equatorial plane (X-X) and a tread band (8),:
- said tread band (8) comprises a central annular portion (A1) located across the equatorial plane (X-X) and two lateral annular portions (A2, A3) opposed to each other relative to the central annular portion (A1);
- the central annular portion (A1) extending in an axial direction over a width smaller than 20% of the width L of the tread band (8);
- the tread band (8) has a void-to-rubber ratio equal to or greater than 10%, preferably equal to or greater than 12%;
- the tread band (8) comprises a plurality of pairs of primary grooves (18, 18') and a plurality of secondary recesses (17);
- the pairs of primary grooves (18, 18') are repeated along a direction of circumferential development of the tyre;
- the primary grooves (18, 18') of each pair are mutually oppositely inclined relative to the equatorial plane (X-X) of the tyre;
- the primary grooves (18, 18') have a length equal to or greater than 30% of the width L of the tread band (8);
- each secondary recess (17) has a maximum length D1 and a maximum width D2 such that D1/D2 ≤ 2 and the maximum length D1 is smaller than or equal to 10 mm;
- each secondary recess (17) is isolated;
- the plurality of secondary recesses (17) extends at least mainly in the lateral annular portions (A2, A3),
- the plurality of secondary recesses (17) is distributed in the tread band (8) with a linear density equal to or higher than two recesses per decimeter of the circumferential development of the tread band (8) **characterized in that** said tread band (8) has a plurality of sipes (19).

2. Tyre (1) according to claim 1, **characterized in that** said plurality of secondary recesses (17) is distributed so that each surface having a width equal to the width of the tread band (8) and a length equal to one decimeter comprises at least two secondary recesses (17).

3. Tyre (1) according to claim 1, **characterized in that** the plurality of secondary recesses (17) is distributed in the tread band (8) with a linear density equal to or lower than 20 recesses per decimeter of the circumferential development of the tread band (8).

4. Tyre (1) according to any one of the previous claims 1 to 3, **characterized in that** said maximum length D1 is substantially equal to 1.5 times said maximum width D2.

5. Tyre (1) according to any one of the previous claims 1 to 3, **characterized in that** the maximum length D1 and the maximum width D2 are substantially the same.

6. Tyre (1) according to any one of the previous claims 1 to 5, **characterized in that** said secondary recesses (17) have a substantially circular plan section.

7. Tyre according to any one of the previous claims 1 to 6, **characterized in that** each secondary recess (17) has a minimum distance from the closest secondary recess (17) greater than 15 mm.

8. Tyre according to any one of the previous claims 1 to 7, **characterized in that** each secondary recess (17) has a minimum distance from the closest secondary recess (17) smaller than 90 mm.

9. Tyre according to any one of the previous claims 1 to 8, **characterized in that** the number of secondary recesses (17) formed in the tread band (8) is greater than twenty, preferably greater than thirty.

10. Tyre according to any one of the previous claims 1 to 8, **characterized in that** the number of secondary recesses (17) formed in the tread band (8) is smaller than three hundred and fifty.

11. Tyre (1) according to any one of claims 1 to 10, **characterized in that** the primary grooves (18, 18') are arranged so as to move away from the equatorial plane (X-X) according to an extension direction having, at least over a portion thereof closer to the equatorial plane (X-X), an inclination angle (α) relative to the equatorial plane (X-X) smaller than 60°.

12. Tyre (1) according to claim 1, **characterized in that** said sipes (19) are arranged so as to alternate with the primary grooves (18, 18') in the circumferential direction.

13. Tyre (1) according to claim 1 or 12, **characterized in that** said sipes (19) do not have intersection points with the primary grooves (18, 18').

14. Tyre (1) according to any one of claims 1 to 13, **characterized in that** said sipes (19) are located only in said lateral annular portions (A2; A3).

15. Tyre (1) according to any one of claims 1 to 14, **characterized in that** said sipes (19) have a length smaller than or equal to 15% of the width L of the tread band (8).

16. Tyre (1) according to any one of claims 1 to 15, **characterized in that** said sipes (19) have a length greater than or equal to 3% of the width L of the tread band (8).

17. Tyre (1) according to any one of claims 1 to 16, **characterized in that** said sipes (19) comprise at least one portion having an extension direction parallel to the extension direction of the primary grooves (18).

18. Tyre (1) according to any one of claims 1 to 17, **characterized in that** at least one third, substantially transverse, groove (20) is located in the central annular portion (A1).

19. Tyre (1) according to claim 18, **characterized in that** the third grooves (20) have a length smaller than or equal to 15% of the width (L) of the tread band (8).

20. Tyre (1) according to claim 18, **characterized in that** the third grooves (20) extend only in the central annular portion (A1).

21. Tyre (1) according to any one of the previous claims 18 to 20, **characterized in that** said third grooves (20) are inclined so as to form an angle (β) of between 60° and 90° relative to the equatorial plane.

22. Tyre (1) according to any one of claims 18 to 21, **characterized in that** said third grooves (20) do not have intersection points with said secondary recesses (17) and said sipes (19).

23. Tyre (1) according to any one of the previous claims 1 to 22, **characterized in that** the central annular portion (A1) has a void-to-rubber ratio equal to or smaller than 5%.

## Patentansprüche

1. Motorradreifen (1), umfassend eine Äquatorialebene (X-X) und einen Laufflächenring (8),
- wobei der Laufflächenring (8) einen zentralen ringförmigen Abschnitt (A1) umfasst, der sich quer über die Äquatorialebene (X-X) befindet, sowie zwei seitliche ringförmige Abschnitte (A2, A3), die einander in Bezug auf den zentralen ringförmigen Abschnitt (A1) gegenüberliegen;
- wobei sich der zentrale ringförmige Abschnitt (A1) in einer axialen Richtung über eine Breite von weniger als 20 % der Breite L des Laufflächenrings (8) erstreckt;
- der Laufflächenring (8) ein Gesamtverhältnis der negativen und positiven Profilanteile gleich oder größer als 10 %, vorzugsweise gleich oder größer als 12 % aufweist;
- der Laufflächenring (8) eine Vielzahl von Paaren von Primärnuten (18, 18') und eine Vielzahl von sekundären Vertiefungen (17) umfasst;
- die Paare von Primärnuten (18, 18') sich entlang einer Richtung der Umfangserstreckung des Reifens wiederholen;
- die Primärnuten (18, 18') eines jeden Paars in Bezug auf die Äquatorialebene (X-X) des Reifens einander entgegengesetzt schräg sind;
- die Primärnuten (18, 18') eine Länge gleich oder von mehr als 30 % der Breite L des Laufflächenrings (8) aufweisen;
- jede sekundäre Vertiefung (17) eine maximale Länge D1 und eine maximale Breite D2 aufweist, so dass D1/D2 ≤ 2 und die maximale Länge D1 kleiner oder gleich 10 mm ist;
- jede sekundäre Vertiefung (17) isoliert ist;
- die Vielzahl von sekundären Vertiefungen (17) sich zumindest hauptsächlich in den seitlichen ringförmigen Abschnitten (A2, A3) erstreckt,
- die Vielzahl von sekundären Vertiefungen (17) in dem Laufflächenring (8) mit einer linearen Dichte gleich oder größer als zwei Vertiefungen pro Dezimeter der Umfangserstreckung des Laufflächenrings (8) verteilt ist, **dadurch gekennzeichnet, dass** der Laufflächenring (8) eine Vielzahl von Lamellen (19) aufweist.

2. Reifen (1) nach Anspruch 1, **dadurch gekennzeichnet, dass** die Vielzahl von sekundären Vertiefungen (17) so verteilt ist, dass jede Oberfläche, die eine Breite gleich der Breite des Laufflächenrings (8) und eine Länge gleich einem Dezimeter aufweist, zumindest zwei sekundäre Vertiefungen (17) umfasst.

3. Reifen (1) nach Anspruch 1, **dadurch gekennzeichnet, dass** die Vielzahl von sekundären Vertiefungen (17) in dem Laufflächenring (8) mit einer linearen Dichte gleich oder weniger als 20 Vertiefungen pro Dezimeter der Umfangserstreckung des Laufflächenrings (8) verteilt ist.

4. Reifen (1) nach einem der vorhergehenden Ansprüche 1 bis 3, **dadurch gekennzeichnet, dass** die maximale Länge D1 im Wesentlichen gleich dem 1,5-Fachen der maximalen Breite D2 ist.

5. Reifen (1) nach einem der vorhergehenden Ansprüche 1 bis 3, **dadurch gekennzeichnet, dass** die maximale Länge D1 und die maximale Breite D2 im Wesentlichen gleich sind.

6. Reifen (1) nach einem der vorhergehenden Ansprüche 1 bis 5, **dadurch gekennzeichnet, dass** die sekundären Vertiefungen (17) einen im Wesentlichen kreisförmigen Planquerschnitt aufweisen.

7. Reifen nach einem der vorhergehenden Ansprüche 1 bis 6, **dadurch gekennzeichnet, dass** jede sekundäre Vertiefung (17) einen minimalen Abstand von der nächsten sekundären Vertiefung (17) von mehr als 15 mm aufweist.

8. Reifen nach einem der vorhergehenden Ansprüche 1 bis 7, **dadurch gekennzeichnet, dass** jede sekundäre Vertiefung (17) einen minimalen Abstand von der nächsten sekundären Vertiefung (17) von weniger als 90 mm aufweist.

9. Reifen nach einem der vorhergehenden Ansprüche 1 bis 8, **dadurch gekennzeichnet, dass** die Anzahl von sekundären Vertiefungen (17), die in dem Laufflächenring (8) ausgebildet ist, höher als zwanzig, vorzugsweise höher als dreißig ist.

10. Reifen nach einem der vorhergehenden Ansprüche 1 bis 8, **dadurch gekennzeichnet, dass** die Anzahl von sekundären Vertiefungen (17), die in dem Laufflächenring (8) ausgebildet ist, kleiner als dreihundertfünfzig ist.

11. Reifen (1) nach einem der Ansprüche 1 bis 10, **dadurch gekennzeichnet, dass** die Primärnuten (18, 18') so angeordnet sind, dass sie sich von der Äquatorialebene (X-X) gemäß einer Erstreckungsrichtung wegbewegen, die zumindest über einen Abschnitt davon, der näher bei der Äquatorialebene (X-X) liegt, einen Schrägwinkel (α) in Bezug auf die Äquatorialebene (X-X) von weniger als 60° aufweist.

12. Reifen (1) nach Anspruch 1, **dadurch gekennzeichnet, dass** die Lamellen (19) so angeordnet sind, dass sie sich mit den Primärnuten (18, 18') in der Umfangsrichtung abwechseln.

13. Reifen (1) nach Anspruch 1 oder 12, **dadurch gekennzeichnet, dass** die Lamellen (19) keine Schnittpunkte mit den Primärnuten (18, 18') aufweisen.

14. Reifen (1) nach einem der Ansprüche 1 bis 13, **dadurch gekennzeichnet, dass** die Lamellen (19) sich nur in den seitlichen ringförmigen Abschnitten (A2; A3) befinden.

15. Reifen (1) nach einem der Ansprüche 1 bis 14, **dadurch gekennzeichnet, dass** die Lamellen (19) eine Länge aufweisen, die kleiner oder gleich 15 % der Breite L des Laufflächenrings (8) ist.

16. Reifen (1) nach einem der Ansprüche 1 bis 15, **dadurch gekennzeichnet, dass** die Lamellen (19) eine Länge aufweisen, die größer oder gleich 3 % der Breite L des Laufflächenrings (8) ist.

17. Reifen (1) nach einem der Ansprüche 1 bis 16, **dadurch gekennzeichnet, dass** die Lamellen (19) zumindest einen Abschnitt umfassen, der eine Erstreckungsrichtung parallel zu der Erstreckungsrichtung der Primärnuten (18) aufweist.

18. Reifen (1) nach einem der Ansprüche 1 bis 17, **dadurch gekennzeichnet, dass** zumindest eine dritte, im Wesentlichen querverlaufende Nut (20) sich in dem zentralen ringförmigen Abschnitt (A1) befindet.

19. Reifen (1) nach Anspruch 18, **dadurch gekennzeichnet, dass** die dritten Nuten (20) eine Länge von mehr als oder gleich 15 % der Breite (L) des Laufflächenrings (8) aufweisen.

20. Reifen (1) nach Anspruch 18, **dadurch gekennzeichnet, dass** die dritten Nuten (20) sich nur in dem zentralen ringförmigen Abschnitt (A1) erstrecken.

21. Reifen (1) nach einem der vorhergehenden Ansprüche 18 bis 20, **dadurch gekennzeichnet, dass** die dritten Nuten (20) so schräg verlaufen, dass sie einen Winkel (β) zwischen 60° und 90° in Bezug auf die Äquatorialebene bilden.

22. Reifen (1) nach einem der Ansprüche 18 bis 21, **dadurch gekennzeichnet, dass** die dritten Nuten (20) keine Schnittpunkte mit den sekundären Vertiefungen (17) und den Lamellen (19) aufweisen.

23. Reifen (1) nach einem der vorhergehenden Ansprüche 1 bis 22, **dadurch gekennzeichnet, dass** der zentrale ringförmige Abschnitt (A1) ein Gesamtverhältnis der negativen und positiven Profilanteile gleich oder kleiner als 5 % aufweist.

## Revendications

1. Pneu pour motocycle (1), comprenant un plan équatorial (X-X) et une bande de roulement (8) :
- ladite bande de roulement (8) comprend une partie annulaire centrale (A1) située à travers le plan équatorial (X-X) et deux parties annulaires latérales (A2, A3) opposées l'une à l'autre par rapport à la partie annulaire centrale (A1) ;
- la partie annulaire centrale (A1) s'étendant dans une direction axiale sur une largeur inférieure à 20% de la largeur L de la bande de roulement (8) ;
- la bande de roulement (8) présente un rapport vide sur caoutchouc supérieur ou égal à 10%, de préférence supérieur ou égal à 12% ;
- la bande de roulement (8) comprend une pluralité de paires de rainures primaires (18, 18') et une pluralité d'évidements secondaires (17) ;
- les paires de rainures primaires (18, 18') sont répétées selon une direction de développement circonférentiel du pneu ;
- les rainures primaires (18, 18') de chaque paire sont inclinées mutuellement de manière opposée par rapport au plan équatorial (X-X) du pneu ;
- les rainures primaires (18, 18') ont une longueur supérieure ou égale à 30% de la largeur L de la bande de roulement (8) ;
- chaque évidement secondaire (17) a une longueur maximale D1 et une largeur maximale D2 de sorte que D1/D2 < 2 et la longueur maximale D1 est inférieure ou égale à 10 mm ;
- chaque évidement secondaire (17) est isolé ;
- la pluralité d'évidements secondaires (17) s'étend au moins principalement dans les parties annulaires latérales (A2, A3),
- la pluralité d'évidements secondaires (17) est répartie dans la bande de roulement (8) avec une densité linéaire supérieure ou égale à deux évidements par décimètre du développement circonférentiel de la bande de roulement (8) **caractérisée en ce que** ladite bande de roulement (8) a une pluralité de lamelles (19).

2. Pneu (1) selon la revendication 1, **caractérisé en ce que** ladite pluralité d'évidements secondaires (17) est répartie de sorte que chaque surface ayant une largeur égale à la largeur de la bande de roulement (8) et une longueur égale à un décimètre comprenne au moins deux évidements secondaires (17).

3. Pneu (1) selon la revendication 1, **caractérisé en ce que** la pluralité d'évidements secondaires (17) est répartie dans la bande de roulement (8) avec une densité linéaire inférieure ou égale à 20 évidements par décimètre du développement circonférentiel de la bande de roulement (8) .

4. Pneu (1) selon l'une quelconque des revendications précédentes 1 à 3, **caractérisé en ce que** ladite longueur maximale D1 est sensiblement égale à 1,5 fois ladite largeur maximale D2.

5. Pneu (1) selon l'une quelconque des revendications précédentes 1 à 3, **caractérisé en ce que** la longueur maximale D1 et la largeur maximale D2 sont sensiblement les mêmes.

6. Pneu (1) selon l'une quelconque des revendications précédentes 1 à 5, **caractérisé en ce que** lesdits évidements secondaires (17) ont une section plane sensiblement circulaire.

7. Pneu selon l'une quelconque des revendications précédentes 1 à 6, **caractérisé en ce que** chaque évidement secondaire (17) a une distance minimale par rapport à l'évidement secondaire le plus proche (17) supérieure à 15 mm.

8. Pneu selon l'une quelconque des revendications précédentes 1 à 7, **caractérisé en ce que** chaque évidement secondaire (17) a une distance minimale par rapport à l'évidement secondaire le plus proche (17) inférieure à 90 mm.

9. Pneu selon l'une quelconque des revendications précédentes 1 à 8, **caractérisé en ce que** le nombre d'évidements secondaires (17) ménagés dans la bande de roulement (8) est supérieur à vingt, de préférence supérieur à trente.

10. Pneu selon l'une quelconque des revendications précédentes 1 à 8, **caractérisé en ce que** le nombre d'évidements secondaires (17) ménagés dans la bande de roulement (8) est inférieur à trois cent cinquante.

11. Pneu (1) selon l'une quelconque des revendications 1 à 10, **caractérisé en ce que** les rainures primaires (18, 18') sont agencées de manière à s'éloigner du plan équatorial (X-X) selon une direction d'extension ayant, au moins sur une partie de celle-ci la plus proche du plan équatorial (X-X), un angle d'inclinaison (α) par rapport au plan équatorial (X-X) inférieur à 60°.

12. Pneu (1) selon la revendication 1, **caractérisé en ce que** lesdites lamelles (19) sont agencées de manière à alterner avec les rainures primaires (18, 18') dans la direction circonférentielle.

13. Pneu (1) selon la revendication 1 ou 12, **caractérisé en ce que** lesdites lamelles (19) n'ont pas de points d'intersection avec les rainures primaires (18, 18').

14. Pneu (1) selon l'une quelconque des revendications 1 à 13, **caractérisé en ce que** lesdites lamelles (19) sont situées uniquement dans lesdites parties annulaires latérales (A2 ; A3).

15. Pneu (1) selon l'une quelconque des revendications 1 à 14, **caractérisé en ce que** lesdites lamelles (19) ont une longueur inférieure ou égale à 15% de la largeur L de la bande de roulement (8).

16. Pneu (1) selon l'une quelconque des revendications 1 à 15, **caractérisé en ce que** lesdites lamelles (19) ont une longueur supérieure ou égale à 3% de la largeur L de la bande de roulement (8).

17. Pneu (1) selon l'une quelconque des revendications 1 à 16, **caractérisé en ce que** lesdites lamelles (19) comprennent au moins une partie ayant une direction d'extension parallèle à la direction d'extension des rainures primaires (18).

18. Pneu (1) selon l'une quelconque des revendications 1 à 17, **caractérisé en ce qu'**au moins une troisième rainure (20) sensiblement transversale est située dans la partie annulaire centrale (A1).

19. Pneu (1) selon la revendication 18, **caractérisé en ce que** les troisièmes rainures (20) ont une longueur inférieure ou égale à 15% de la largeur (L) de la bande de roulement (8).

20. Pneu (1) selon la revendication 18, **caractérisé en ce que** les troisièmes rainures (20) ne s'étendent que dans la partie annulaire centrale (A1).

21. Pneu (1) selon l'une quelconque des revendications précédentes 18 à 20, **caractérisé en ce que** lesdites troisièmes rainures (20) sont inclinées de manière à former un angle (β) compris entre 60° et 90° par rapport au plan équatorial.

22. Pneu (1) selon l'une quelconque des revendications 18 à 21, **caractérisé en ce que** lesdites troisièmes rainures (20) n'ont pas de points d'intersection avec lesdits évidements secondaires (17) et lesdites lamelles (19).

23. Pneu (1) selon l'une quelconque des revendications précédentes 1 à 22, **caractérisé en ce que** la partie annulaire centrale (A1) présente un rapport vide sur caoutchouc inférieur ou égal à 5%.
